# EUROPÄISCHE PATENTANMELDUNG

(11) **EP 2 506 121 A2**
(43) Veröffentlichungstag der Anmeldung: **03.10.2012**
(21) Anmeldenummer: 12162671.7
(22) Anmeldetag: 30.03.2012
(51) Int. Cl.: G06F 3/02

(54) **Eingabevorrichtung**

(30) Priorität: 31.03.2011 DE 202011004688 U; 18.05.2011 DE 202011100871 U
(71) Anmelder: BURG-WÄCHTER KG, 58540 Meinerzhagen (DE)
(72) Erfinder: Lüling, Harald, 58540 Meinerzagen (DE)
(74) Vertreter: Stenger, Watzke & Ring

(57) **Zusammenfassung**

Die Erfindung betrifft eine Eingabevorrichtung, insbesondere zur Steuerung und/oder Übermittlung von Öffnungs- und/oder Schließbefehlen eines elektronischen Schlosses. Zudem betrifft die Erfindung ein Verfahren zum Betrieb einer Eingabevorrichtung zur Steuerung und/oder Übermittlung von Öffnungs- und/oder Schließbefehlen eines elektronischen Schlosses ausgebildet ist. Um die Handhabung und Bedienbarkeit zu verbessern bei gleichzeitiger Energieeinsparung, wird vorrichtungsseitig vorgeschlagen eine Eingabevorrichtung, insbesondere zur Steuerung und/oder Übermittlung von Öffnungs- und/oder Schließbefehlen eines elektronischen Schlosses, mit einem Gehäuse (1), einem am oder im Gehäuse (1) angeordneten und Tastfelder (12) aufweisende Eingabefeld, und einem Beleuchtungselement (20) zum Beleuchten der Tastfelder (12), wobei das Beleuchtungselement (20) innerhalb des Eingabefelds zwischen den Tastfeldern (12) angeordnet ist, wobei das Beleuchtungselement (20) signaltechnisch mit einem oder mehreren Tastfeldern (12) verbunden ist, derart, dass durch einen Druck auf ein Tastfeld (12) das Beleuchtungselement (20) von einem aktivierten in einen deaktivierten Zustand oder von einem deaktivierten in einen aktivierten Zustand schaltbar ist, und wird verfahrenseitig vorgeschlagen ein Verfahren zum Betrieb einer Eingabevorrichtung zur Steuerung und/oder Übermittlung von Öffnungs- und/oder Schließbefehlen eines elektronischen Schlosses, mit einem Gehäuse (1), einem am oder im Gehäuse (1) angeordneten und Tastfelder (12) aufweisende Eingabefeld, und einem Beleuchtungselement (20) zum Beleuchten der Tastfelder (12), wobei das Beleuchtungselement (20) innerhalb des Eingabefelds zwischen den Tastfeldern (12) angeordnet ist, wobei das Beleuchtungselement (20) signaltechnisch mit einem oder mehreren Tastfeldern (12) verbunden ist, wobei durch einen Druck auf ein Tastfeld (12) das Beleuchtungselement (20) von einem aktivierten in einen deaktivierten Zustand oder von einem deaktivierten in einen aktivierten Zustand geschaltet wird.

## Beschreibung

Die Erfindung betrifft eine Eingabevorrichtung, insbesondere zur Steuerung und/oder Übermittlung von Öffnungs- und/oder Schließbefehlen eines elektronischen Schlosses. Zudem betrifft die Erfindung ein Verfahren zum Betrieb einer Eingabevorrichtung zur Steuerung und/oder Übermittlung von Öffnungs- und/oder Schließbefehlen eines elektronischen Schlosses ausgebildet ist.

Eingabevorrichtungen sind an sich aus dem Stand der Technik bekannt. Sie dienen als Mensch-Maschine-Schnittstelle. Üblicherweise ist bei derartigen Vorrichtungen vorgesehen, dass eine Handlung eines Nutzers, beispielsweise das Drücken eines Knopfes eines Eingabefeldes, mittels der Eingabevorrichtung in ein elektrisches Signal umgewandelt wird. Dieses Signal kann dann durch eine Rechnereinheit, Logik und/oder dergleichen weiterverarbeitet werden und bestimmte Aktionen auslösen.

Insbesondere sind auch elektronische Schlösser bekannt, beispielsweise als Türschlösser. Bei derartigen Schlössern wird die Schlossmechanik zum Öffnen/Schließen der Tür durch einen elektrischen Antrieb angetrieben. Zur Ansteuerung des elektrischen Antriebs dient ein das Schließgeheimnis des Schlosses aufweisender Berechtigungscode. Dies kann beispielsweise eine Smart-Card, ein Transponder und/oder dergleichen sein.

Aus dem Stand der Technik sind aber auch solche elektronischen Schlösser bekannt, die durch eine PIN-Code-Eingabe bedient werden. Hierzu ist in der Nähe des Schlosses, beispielsweise neben einer Tür, die mit einem elektronischen Schloss ausgestattet ist, eine gattungsgemäße Eingabevorrichtung angeordnet. Durch die Eingabe einer bestimmten Ziffernfolge kann ein berechtigter Nutzer eine Türöffnung- und/oder Schließung auslösen.

Wenngleich sich die aus dem Stand der Technik bekannten Eingabevorrichtungen im alltäglichen Praxiseinsatz bewährt haben, besteht dennoch Verbesserungsbedarf. Da gattungsgemäße Eingabevorrichtungen oftmals außerhalb von Gebäuden angeordnet sind, muss sichergestellt werden, dass diese unter allen denkbaren Witterungsverhältnissen bestmöglich bedienbar und handhabbar sind. Gleichzeitig müssen strengste Sicherheitsanforderungen erfüllt werden, um eine Manipulierbarkeit der Eingabevorrichtung zu verhindern. Zusätzlich ist es das ständige Bestreben den Energieverbrauch von Eingabevorrichtungen zu verringern, insbesondere auch damit ein Energiespeicher, beispielsweise eine Batterie, ein Akkumulator und/oder dergleichen, seltener gewechselt werden muss.

Ausgehend von diesem Stand der Technik ist es die Aufgabe der vorliegenden Erfindung, eine gattungsgemäße Eingabevorrichtung dahingehend weiterzuentwickeln, dass insbesondere die Handhabung und Bedienbarkeit verbessert werden, bei gleichzeitiger Energieeinsparung. Zudem liegt der Erfindung die Aufgabe zugrunde, ein gattungsgemäßes Verfahren hinsichtlich der Handhabung und Bedienbarkeit zu verbessern bei gleichzeitiger Energieeinsparung.

Zur Lösung wird mit der Erfindung vorgeschlagen eine Eingabevorrichtung, insbesondere zur Steuerung und/oder Übermittlung von Öffnungs- und/oder Schließbefehlen eines elektronischen Schlosses, mit einem Gehäuse, einem am oder im Gehäuse angeordneten und Tastfelder aufweisende Eingabefeld, und einem Beleuchtungselement zum Beleuchten der Tastfelder, wobei das Beleuchtungselement innerhalb des Eingabefelds zwischen den Tastfeldern angeordnet ist, wobei das Beleuchtungselement signaltechnisch mit einem oder mehreren Tastfeldern verbunden ist, derart, dass durch einen Druck auf ein Tastfeld das Beleuchtungselement von einem aktivierten in einen deaktivierten Zustand oder von einem deaktivierten in einen aktivierten Zustand schaltbar ist.

Die Eingabevorrichtung weist ein Gehäuse auf. An dem Gehäuse ist ein Eingabefeld angeordnet. Das Eingabefeld kann beispielsweise ein Nummernblock sein. Entscheidend ist, dass das Eingabefeld aus einzelnen Tastfeldern besteht. Die Tastfelder dienen der Umsetzung einer Eingabe eines Benutzers, beispielsweise eines Drückens auf das Tastfeld mit einem Finger, in ein elektrisches Signal. Das elektrische Signal wird dann innerhalb der Eingabevorrichtung weiterverarbeitet. Hierzu kann die Eingabevorrichtung eine entsprechende Steuerungselektronik, Rechnereinheit und/oder dergleichen aufweisen.

Der Kern der Erfindung besteht nun darin, dass wenigstens ein Beleuchtungselement vorgesehen ist, welches zum Beleuchten der Tastfelder dient. Erfindungsgemäß ist das Beleuchtungselement zwar innerhalb des Eingabefelds angeordnet, jedoch zwischen den einzelnen Tastfeldern. Dadurch ist zum einen sichergestellt, dass das Beleuchtungselement durch beispielsweise einen Finger eines Nutzers beim bestimmungsgemäßen Zusammenwirken mit einem Tastfeld nicht verdeckt wird. Zum anderen ist sichergestellt, dass ein Nutzer bei einer bestimmungsgemäßen Bedienung der Eingabevorrichtung das Beleuchtungselement jederzeit sehen kann, da dieses nicht verdeckt wird. Dadurch wird die Orientierung eines Nutzers beim Bedienen der Eingabevorrichtung deutlich erhöht. Denn selbst unter schwierigsten Witterungsbedingungen, beispielsweise Dunkelheit und/oder starkem Regen, ist das wenigstens eine Beleuchtungselement auch bei einer Bedienung der Eingabevorrichtung jederzeit sichtbar. Ausgehend von dem wenigstens einen Beleuchtungselement kann sich der Nutzer innerhalb des Eingabefelds orientieren, und die von ihm gesuchten Tastfelder sicher auffinden. Dadurch, dass das wenigstens eine Beleuchtungselement also gerade zwischen den Tastfeldern des Eingabefelds angeordnet ist, und nicht etwa unmittelbar im Bereich der Tastfelder, wird die Sichtbarkeit und Handhabbarkeit der Eingabevorrichtung insbesondere bei schlechten Witterungs- und/oder Sichtverhältnissen stark verbessert.

Erfindungsgemäß ist das Beleuchtungselement signaltechnisch mit einem oder mehreren Tastfeldern verbunden. Sind mehrere Beleuchtungselemente vorgesehen, könne diese synchron angesteuert werden, oder auch unabhängig voneinander. Bei einer unabhängigen Ansteuerung kann beispielsweise immer das dem betreffenden Tastfeld nächstliegende Beleuchtungselement geschaltet werden, so dass ein Nutzer nicht nur über den Druck auf das Tastfeld an sich, sondern auch noch bezüglich des Bereichs, in dem das Tastfeld liegt, eine optische Rückmeldung erhält.

Die signaltechnische Koppelung zwischen dem Beleuchtungselement und dem oder den Tastfeld(ern) ermöglicht ein Schalten des Beleuchtungselements durch nutzerseitigen Druck auf ein Tastfeld. Dies ermöglicht eine Rückmeldung, ob ein Tastfeld gedrückt wurde. Dies ist besonders dann vorteilhaft, wenn die Tastfelder einstückig mit dem Gehäuse ausgebildet sind, da dann bei einer Betätigung eines Tastfelds keine spürbare Relativbewegung zwischen Tastfeld und Gehäuse erfolgt.

Das Eingabefeld kann als Tastatur, Nummernblock und/oder dergleichen ausgebildet sein. Das wenigstens eine Beleuchtungselement kann als Glühlampe, LED, SMD-Baustein und/oder dergleichen ausgebildet sein.

Gemäß einer vorteilhaften Weiterbildung der Erfindung ist das Beleuchtungselement zwischen einem aktivierten und einem deaktivierten Zustand schaltbar ausgebildet, wobei durch einen Druck auf ein Tastfeld das Beleuchtungselement in den jeweils anderen zustand schaltbar ist. Die erfindungsgemäße Besonderheit liegt darin, dass das Schalten des Beleuchtungselements unabhängig von dem Zustand, in dem das Beleuchtungselement aktuell befindlich ist, erfolgt. Entweder ist das Beleuchtungselement gerade aktiviert, so dass den Druck des Tastfelds das Beleuchtungselement in den deaktivierten Zustand geschaltet wird. Oder das Beleuchtungselement ist gerade deaktiviert, so dass den Druck des Tastfelds das Beleuchtungselement in den aktivierten Zustand geschaltet wird. Durch den Druck auf ein Tastfeld wird also nicht ein bestimmter Zustand des Beleuchtungselements, beispielsweise der aktivierte Zustand, absolut gewählt, sonder es erfolgt vielmehr ein einfaches Umschalten, ohne einen konkreten Zielzustand. Die erfindungsgemäße Lösung kann als relatives Schalten des Beleuchtungselements in Bezug auf den jeweils aktuellen Zustand angesehen werden. In jedem Fall ist sichergestellt, dass ein Benutzer in jedem Zustand der Vorrichtung, insbesondere des Beleuchtungselements, eine Rückmeldung über den Druck eines Tastfelds erhält.

Gemäß einer vorteilhaften Weiterbildung der Erfindung ist das Beleuchtungselement bei Unterschreiten einer definierten Lichtstärke aktiviert und durch ein Signal eines Tastfelds deaktivierbar, wobei das Beleuchtungselement bei Überschreiten der definierten Lichtstärke deaktiviert ist und durch ein Signal eines Tastfelds aktivierbar ist. Mit dem Beleuchtungselement sind im Wesentlichen zwei Zustände realisierbar. Der erste Zustand des Beleuchtungselements ist der deaktivierte Zustand, was bedeutet, dass das Beleuchtungselement nicht leuchtet. Der zweite Zustand ist der aktivierte Zustand, was bedeutet, dass das Beleuchtungselement leuchtet. Der besondere Clou dieser erfindungsgemäßen Weiterbildung besteht nun darin, dem Zustand des Beleuchtungselements in Abhängigkeit der Lichtstärke vorzugeben. Dies bedeutet, dass das Beleuchtungselement bei Dämmerung und/oder nachts dauerhaft leuchtet, und bei Tageslicht, das heißt bei einer bestimmten Mindestlichtstärke nicht leuchtet. Somit ist das Beleuchtungselement nur dann aktiv, wenn es tatsächlich zur Orientierung des Nutzers benötigt wird, nämlich bei Dunkelheit und/oder schlechten Sichtverhältnissen. Der besondere Clou besteht jedoch auch darin, dass bei einer Eingabe, das heißt beispielsweise einem Druck auf eines der Tastfelder, das Beleuchtungselement in den jeweils anderen Zustand geschaltet wird. Hierbei kann vorgesehen sein, dass der jeweils andere Zustand solange gehalten wird, wie ein Tastfeld gedrückt wird, das heißt ein elektrisches Signal am Tastfeld erzeugt wird. Es kann aber auch vorgesehen sein, dass das Drücken eines Tastfelds zu einem Umschalten des Zustands des Beleuchtungselements für ein festes Zeitfenster führt. Gemäß dieser Weiterbildung der Erfindung erhält ein Nutzer der Eingabevorrichtung bei einem Druck auf ein Tastfeld immer eine Rückmeldung, egal in welchem Zustand sich das Beleuchtungselement befindet. Die Rückmeldung besteht immer entweder in einem Aufleuchten des Beleuchtungselements oder in einem vorübergehenden Deaktivieren. Diese Weiterbildung hat erhebliche Vorteile. So hat ein Nutzer der Eingabevorrichtung immer eine optische Rückmeldung über eine Eingabe, welche Rückmeldung auch nicht durch einen Finger oder dergleichen verdeckt wird. Gleichzeitig lässt sich durch die Lichtstärke-abhängige Schaltung des Beleuchtungselements massiv Energie einsparen. Das Beleuchtungselement leuchtet nämlich nur dann dauerhaft, wenn es auch wirklich zur Orientierung des Nutzers benötigt wird. Ergänzend kann das Gehäuse eine Fotozelle aufweisen, mittels der Lichtenergie in elektrische Energie umwandelbar ist und die der Energieversorgung der Eingabevorrichtung und/oder als Ladestrom für einen Akkumulator dient.

Gemäß einer vorteilhaften Weiterbildung der Erfindung ist das Beleuchtungselement innerhalb des Gehäuses angeordnet. In vorteilhafter Weise ist das Beleuchtungselement somit vor Witterungseinflüssen geschützt. Unabhängig davon kann auch vorgesehen sein, dass das Eingabefeld und/oder die Tastfelder aus einem transparenten oder transluzenten Kunststoff ausgebildet ist bzw. sind. Ein solcher Kunststoff sorgt für eine gewisse Lichtstreuung, so dass bereits mit einem einzigen Beleuchtungselement der Eindruck einer leuchtenden Fläche im Bereich des Eingabefelds erzeugt werden kann. Besonders vorteilhaft ist ein solcher Kunststoff auch dann, wenn das Beleuchtungselement innerhalb des Gehäuses angeordnet ist. Das Beleuchtungselement ist dann sicher vor Witterungseinflüssen geschützt, wobei sich gleichzeitig das vom Beleuchtungselement ausgesandte Licht im Bereich des Eingabefelds streuen kann. Hierdurch wird gleichzeitig die Betriebssicherheit und die Lesbarkeit und Handhabbarkeit der Eingabevorrichtung erhöht. Dies kann insbesondere dahingehend ausgenutzt werden, dass ein einziges Beleuchtungselement ausreicht, um mehrere benachbarte Tastfelder des Eingabefelds auszuleuchten. Im Falle eines Nummernblocks kann beispielsweise vorgesehen sein, dass jeweils ein Beleuchtungselement zwischen vier benachbarten, rechtwinklig zueinander angeordneten Tastfeldern des Nummernblocks angeordnet ist.

Es kann aber auch vorgesehen sein, dass das Beleuchtungselement in rechtwinkliger Draufsicht auf das Eingabefeld hinter einem Tastfeld angeordnet ist. Das Beleuchtungselement dient dann einer zentrischen Ausleuchtung des Tastfelds. Durch die zentrische Ausleuchtung ist das Tastfeld auch bei schlechten Lichtverhältnissen intuitiv zu finden. Insbesondere kann vorgesehen sein, dass hinter allen Tastfeldern jeweils ein Beleuchtungselement angeordnet ist.

Gemäß einer vorteilhaften Weiterbildung der Erfindung ist bzw. sind das Eingabefeld und/oder die Tastfelder einstückig mit dem Gehäuse ausgebildet. Eine solche Ausbildung ist dann bevorzugt, wenn die Eingabevorrichtung außerhalb eines Gebäudes angeordnet ist und ständigen Witterungseinflüssen ausgesetzt ist. Diese Ausbildung ist aber auch in vielen anderen Umfeldern günstig, beispielsweise in Räumen mit einer besonders hohen Luftfeuchtigkeit. Ganz besonders vorteilhaft ist diese Weiterbildung dann, wenn in der vorstehend beschriebenen Weise mit dem Beleuchtungselement eine Rückmeldung über einen Druck auf ein Tastfeld optisch erzeugt wird, denn wenn das Eingabefeld und/oder die Tastfelder einstückig mit dem Gehäuse ausgebildet ist bzw. sind erhält der Nutzer beim Druck auf ein Tastfeld keine mechanische Rückmeldung, wie dies beispielsweise bei mechanischen Schaltern, Mikroschaltern und/oder dergleichen der Fall wäre. Hier dient die optische Bestätigung mittels des Beleuchtungselements als besonders vorteilhaft im Sinne der Bedienbarkeit und Handhabung der Eingabevorrichtung.

Gemäß einer vorteilhaften Weiterbildung der Erfindung weist die Eingabevorrichtung einen Lichtsensor auf. Der Lichtsensor kann beispielsweise als Fotosensor, CCD-Sensor, Fotowiderstand, Fotodiode, Fototransistor und/oder dergleichen ausgebildet sein. Dies ermöglicht es, das Beleuchtungselement in Abhängigkeit der realen Lichtstärke zu schalten. Hierdurch ergibt sich der Vorteil der besonders genauen Steuerung des Beleuchtungselements. Es wird ein Maximum an Energie eingespart. Die Alternative zu dem Lichtsensor ist eine rein zeitgesteuerte Schaltung des Beleuchtungselements. Die zeitgesteuerte Schaltung kann bevorzugter Weise an die jeweils aktuellen Sonnenauf- und Sonnenuntergangszeiten angepasst sein. Ein Verzicht auf den Lichtsensor reduziert somit die Bauteilkosten der Eingabevorrichtung. Der Einsatz des Lichtsensors führt hingegen zu bestmöglichen Ergebnissen hinsichtlich der Energieeinsparung.

Erfindungsgemäß ist der Lichtsensor signaltechnisch mit dem Beleuchtungselement bzw. den Beleuchtungselementen gekoppelt. Hieraus ergibt sich der Vorteil einer besonders einfachen elektrischen Schaltung. Es ist dem Grunde nach gar keine Auswertung und/oder Weiterverarbeitung der Daten des Lichtsensors notwendig, sondern das Beleuchtungselement kann unmittelbar an ein Ausgangssignal des Lichtsensors gekoppelt sein. Es ergibt sich der Vorteil einer besonders einfachen Realisierung.

Gemäß einer vorteilhaften Weiterbildung der Erfindung ist das Beleuchtungselement mit unterschiedlichen Lichtstärken betreibbar ausgebildet. Dies bedeutet, dass ein und dasselbe Beleuchtungselement in verschiedenen Helligkeitsstufen leuchten kann. Hierdurch ergeben sich weitere Möglichkeiten für Rückmeldungen an einen Benutzer. Beispielsweise kann die Bereitschaft der Eingabevorrichtung zum Empfang eines Signals durch ein Leuchten angezeigt werden, welches lichtstärker oder lichtschwächer als das Leuchten in Reaktion auf Tastfeldsignale ist. Ein Benutzer kann dann aufgrund der Lichtstärke des Beleuchtungselements erkennen, ob es sich um eine generelle Bereitschaft der Eingabevorrichtung oder eine Rückmeldung resultierend aus einem Tastfelddruck handelt. Die Lichtfarbe kann abhängig von der Umgebungshelligkeit steuerbar sein, so dass sich zum einen die Erkennbarkeit der Tasten des Tastfelds verbessern lässt und zum anderen eine verbesserte Energiesteuerung ergibt, die für eine längere Lebensdauer der Energieversorgung nutzbar ist.

Gemäß einer vorteilhaften Weiterbildung der Erfindung weist die Eingabevorrichtung einen Bewegungssensor auf. Der Bewegungssensor dient der Detektion eines Aufenthalts eines Benutzers in der Nähe der Eingabevorrichtung. Der Bewegungssensor ist signaltechnisch mit dem Beleuchtungselement verbunden. Somit lässt sich beispielsweise ein Leuchten anzeigen, sobald sich ein Benutzer in der Nähe der Eingabevorrichtung befindet. Ein solches Leuchten kann auch als Bereitschaftssignal bezeichnet werden. Zur Anzeige von derartigen Bereitschaftssignalen kann auch ein zusätzliches Beleuchtungselement vorgesehen sein. Dieses kann auch außerhalb des Eingabefelds liegen. Das zusätzliche Beleuchtungselement kann als LED, insbesondere grüne LED, ausgebildet sein. Somit kann einem Benutzer selbsterklärend und intuitiv eine Bereitschaft der Vorrichtung angezeigt werden. Ferner dient dieses Merkmal der Reduzierung des Energiebedarfs, da eine dauerhafte Beleuchtung des Tastfeldes nicht erforderlich ist.

Zur Lösung wird verfahrensseitig vorgeschlagen ein Verfahren zum Betrieb einer Eingabevorrichtung zur Steuerung und/oder Übermittlung von Öffnungs- und/oder Schließbefehlen eines elektronischen Schlosses, mit einem Gehäuse, einem am oder im Gehäuse angeordneten und Tastfelder aufweisende Eingabefeld, und einem Beleuchtungselement zum Beleuchten der Tastfelder, wobei das Beleuchtungselement innerhalb des Eingabefelds zwischen den Tastfeldern angeordnet ist, wobei das Beleuchtungselement signaltechnisch mit einem oder mehreren Tastfeldern verbunden ist, wobei durch einen Druck auf ein Tastfeld das Beleuchtungselement von einem aktivierten in einen deaktivierten Zustand oder von einem deaktivierten in einen aktivierten Zustand geschaltet wird.

Gemäß einer vorteilhaften Weiterbildung wird das Beleuchtungselement in Abhängigkeit einer aktuellen Lichtstärke angesteuert. Der Clou dieser Weiterbildung besteht darin, dass das Beleuchtungselement immer in Abhängigkeit der aktuellen Lichtstärke entweder in einem leuchtenden oder in einem nicht leuchtenden Zustand betrieben wird. Dies bedeutet, dass sich bei Tageslicht bzw. entsprechend ausreichenden Lichtverhältnissen das Eingabefeld auch ohne ein leuchtendes Beleuchtungselement durch einen Nutzer gut ablesen und bedienen lässt. Vielmehr beleuchtet das Beleuchtungselement das Eingabefeld bzw. die Tastfelder nur dann, wenn dies auch tatsächlich notwendig ist. Dies ist beispielsweise in der Dämmerung und/oder nachts der Fall. In vorteilhafter Weise lässt sich dadurch der Energieverbrauch der Eingabevorrichtung verringern. Dabei kann vorgesehen sein, dass das Beleuchtungselement in Abhängigkeit eines fest einprogrammierten Tag/Nacht-Rhythmus durchgeführt wird. Es kann aber auch ein Lichtsensor vorgesehen sein, mit dem die aktuelle Lichtstärke gemessen wird. Dadurch lässt sich eine besonders bedarfsgerechte Ansteuerung des Beleuchtungselements erreichen. Es kann noch mehr Energie eingespart werden.

Der leuchtende Zustand kann mehrere Stufen mit unterschiedlichen Lichtstärken umfassen. Es kann vorgesehen sein, dass zur Signalisierung einer Bereitschaft der Tastatur ein lichtstärkeres oder lichtschwächeres Leuchten genutzt wird als zur Beleuchtung der Tastfelder. Alternativ oder ergänzend kann vorgesehen sein, dass das lichtstärkere oder lichtschwächere Leuchten zur Signalisierung einer vollständigen und/oder zutreffenden Eingabe am Eingabefeld genutzt wird. Auch kann beziehungsweise können das Signalisieren einer vollständigen und/oder zutreffenden Eingabe und/oder das Signalisieren einer Bereitschaft der Tastatur mit einem zusätzlichen Beleuchtungselement, beispielsweise einer grünen LED, durchgeführt werden.

Gemäß einer vorteilhaften Weiterbildung der Erfindung wird ein Leuchten des Beleuchtungselements bei Anliegen eines Signals eines Tastfelds deaktiviert oder es wird ein Leuchten des Beleuchtungselements bei Anliegen eines Signals eines Tastfelds aktiviert. Dies bedeutet, dass unabhängig vom aktuellen Zustand des Beleuchtungselements immer eine optische Rückmeldung über den Druck auf ein Tastfeld ausgegeben werden kann. Leuchtet das Beleuchtungselement konstant, wird die Rückmeldung bei Anliegen eines Signals eines Tastfelds kurzzeitig deaktiviert et vice versa.

Mit der Erfindung wird somit erstmalig ein Verfahren zum Betrieb einer Eingabevorrichtung vorgeschlagen, mit dem es gleichzeitig möglich ist, den Energieverbrauch einer gattungsgemäßen Eingabevorrichtung zu verringern und die Handhabung und Bedienbarkeit der Eingabevorrichtung zu verbessern. Dies betrifft insbesondere solche Eingabevorrichtung, die aus Gründen der Witterungsbeständigkeit ein einstückig mit dem Gehäuse ausgebildetes Eingabefeld und/oder Tastfelder aufweist bzw. aufweisen. Bei solchen Eingabevorrichtungen war es bislang nicht möglich, einem Nutzer eine zufriedenstellende Rückmeldung über eine Eingabe zu vermitteln bei gleichzeitiger Realisierung einer guten Ablesbarkeit der Eingabevorrichtung.

Weitere Vorteile und Merkmale der Erfindung ergeben sich aus der nachfolgenden Figurenbeschreibung. Dabei zeigen:
Figur 1 eine Eingabevorrichtung mit einzelnen Komponenten in Explosivdarstellung,
Figur 2 eine perspektivische Ansicht der Eingabevorrichtung gemäß Figur 1 im endmontierten Zustand, und
Figur 3eine perspektivische Seitenansicht der Eingabevorrichtung gemäß den Figuren 1 und 2 im endmontierten Zustand.

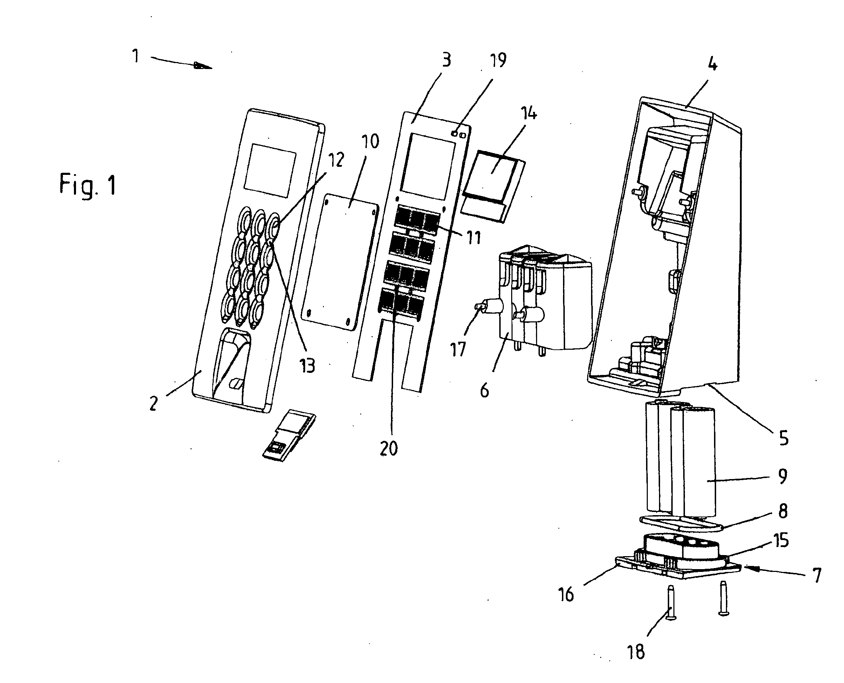

Die Figur 1 zeigt in Explosivdarstellung die erfindungsgemäße Eingabevorrichtung mit wesentlichen Komponenten. Die Eingabevorrichtung umfasst ein Gehäuse 1, welches aus einem Deckel 2 und einem Gehäuseunterteil 4 besteht. Das Gehäuseunterteil 4 ist durch einen schalenförmigen Körper aus Kunststoff gebildet. Der Deckel 2 ist durch ein das Gehäuseunterteil 4 abdeckendes Element aus Kunststoff gebildet. Das Gehäuseunterteil weist eine Öffnung 5 auf, durch welche eine Energiequelle zugänglich ist. Die Energiequelle umfasst eine Batteriebox 6, sowie daran anzuordnende Batterien 9. Die Öffnung 5 des Gehäuseunterteils 4 ist mittels eines Verschlusselements 7 verschließbar. Das Verschlusselement 7 weist einen Kragen 15 auf, welcher eine einsteckseitige Schulter zum Anlegen einer Dichtung 8 bereitstellt. Der Deckel 7 ist aus Kunststoff gebildet. Der Deckel 7 weist ferner als Greifmittel einen angefasten Flansch 16 auf, welcher die Handhabung des Deckels 7 für einen Nutzer erleichtert.

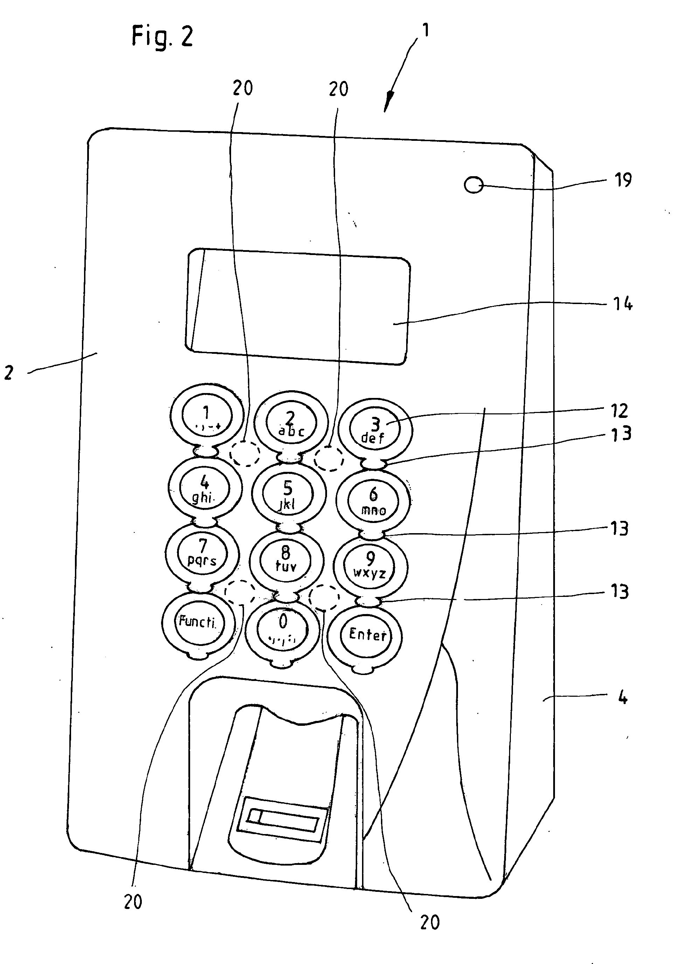

Figur 2 zeigt die erfindungsgemäße Eingabevorrichtung im montierten Zustand in perspektivischer Darstellung. Der Deckel 2 ist mit dem Gehäuseunterteil 4 wasserdicht verbunden. Vorliegend ist der Deckel 2 mit dem Gehäuseunterteil 4 durch Ultraschallschweißung verbunden. Dies bewirkt einerseits, dass die aus Kunststoff gebildete Bauteile Deckel 2 und Gehäuse 4 wasserdicht miteinander verbunden sind, und andererseits der Deckel 2 nicht zerstörungsfrei vom Gehäuseteil 4 lösbar ist. Bei einer Zerstörung des Gehäuses 1 können entsprechende Maßnahmen, beispielsweise eine Türverriegelung oder -öffnung eingeleitet werden. Dies dient insbesondere der verbesserten Sicherheit der Eingabevorrichtung.

Weiterhin ist am Deckel 2 und/oder am Gehäuseunterteil 4 eine semipermeable Membran angeordnet. Die semipermeable Membran ist derart angeordnet, so dass sie in Richtung vom Gehäuseinneren nach außen für Flüssigkeit durchlässig ist, und in der Gegenrichtung flüssigkeitsdicht ist.

Im Gehäuse 1 ist eine nicht dargestellte Steuerungselektronik angeordnet, welche eine Platine 3 umfasst. Wie in Figur 1 dargestellt, weist die Platine 3 elektronische Schalter 11 auf, welche eine mechanische Eingabe eines Benutzers in ein elektrisches Signal umwandeln. Die nicht dargestellte Steuerungselektronik weist dabei geeignete Mittel auf, beispielsweise eine drahtlose Kommunikationsverbindung, mittels welcher durch Eingaben des Nutzers ausgelöste Öffnungs- und/oder Schließbefehle an ein elektronisches Schloss übermittelbar sind. Die elektronischen Schalter 11 auf der Platine 3 sind korrespondierend zu auf dem Deckel 2 vorgesehenen Tastfeldern 12 angeordnet. Die Tastfelder 12 im Deckel 2 sind durch halbkugelartige Vertiefungen gebildet. In den Bereichen der Tastfelder 12 weist der Deckel 2 eine geringere Materialstärke auf, als in den nicht als Tastfelder 12 ausgebildeten Bereichen. Im montierten Zustand wird ein auf die dem Gehäuseinneren abgewandte Seite des Deckels ausgeübter Druck auf ein Tastfeld 12 auf den jeweils zum Tastfeld 12 korrespondierenden elektronischen Schalter 11 der Platine 3 übertragen. Insofern ist es möglich, mittels der Tastfelder 12, welche beispielsweise die Ziffern 0 bis 9 abstrahieren, eine Ziffernfolge an die Eingabevorrichtung zu übermitteln.

Die Tastfelder 12 sind einstückig mit dem Deckel 2 ausgebildet. An den Umfang jedes Tastfelds 12 schließt sich eine Tasche an, welche der Aufnahme von Flüssigkeit, insbesondere Regenwasser dient. Insbesondere sind die Taschen von in Längsrichtung der Eingabevorrichtung benachbarten Tastfeldern 12 sowohl an den Umfang des einen Tastfeldes, als auch an den Umfang des benachbarten Tastfeldes angeschlossen. Feuchtigkeit wird somit in Gravitationsrichtung von den Tastfeldern weg abgeleitet. Die Taschen 13 sind dabei als Vertiefungen ausgebildet, sind jedoch weniger tief als die Tastfelder 12 ausgebildet.

Die Platine 3 ist mittels Auflagern im Gehäuse gelagert. Zwischen Platine 3 und Auflagern 17 sind Federelemente vorgesehen. Im montierten Zustand halten die Federelemente die Platine 3 unter einer definierten Vorspannung gegen die Rückseite des Deckels 2 gedrückt. Zwischen Platine 3 und Deckel 2 ist ein Lichtleiter 10 vorgesehen. Der Lichtleiter 10 beleuchtet die Tastfelder 12 des Deckels 2 rückseitig. Insbesondere kann auch vorgesehen sein, dass der Lichtleiter 10 ein jeweiliges Tastfeld 12 beim Drücken des Tastfelds 12 rückseitig entsprechend beleuchtet. Die Position von Platine 3 und Lichtleiter 10 ist in der Deckelebene relativ zum Deckel 2 festgelegt. Dazu dienen die Auflagerelemente 17. Diese lagern sowohl Platine 3, Lichtleiter 10 als auch Deckel 14 in der Deckelebene.

Der Deckel 2 ist aus einem transparenten oder transluzenten Kunststoff gebildet, welcher Kunststoff an der dem Gehäuseinneren zugewandten Seite mit einer bedruckbaren Folie verbunden, insbesondere verklebt ist. Die bedruckbare Folie weist dabei im vorliegenden Ausführungsbeispiel eine weiße Grundfarbe auf. In den zu den Tastfeldern 12 des Deckels 2 korrespondierenden Bereichen ist die Folie mit Ziffern und/oder Buchstaben bedruckt. Ein Nutzer kann so in intuitiver Weise die verschiedenen Tastfelder 12 bestimmten Funktionen zuordnen. Im Bereich eines Displays 14 ist ein nicht bedruckter Bereich auf der Folie vorgesehen. Ein Nutzer kann somit durch den transparenten oder transluzenten Kunststoff hindurch das Display ablesen. Neben dem Display 14 können andere und/oder zusätzliche Anzeigeelemente vorgesehen sein, insbesondere akustische Anzeigen wie beispielsweise einen Schallgeber. Im gezeigten Ausführungsbeispiel sind auf der Platine 3 Beleuchtungselemente 20 vorgesehen, welche mit korrespondierenden transparenten oder transluzenten Bereichen des Deckels 2 zusammenwirken. Die Beleuchtungselemente 20 sind signaltechnisch mit den Tastfeldern 12 und/oder einem Lichtsensor 19 gekoppelt. Das von den Beleuchtungselementen 20 emittierbare Licht streut sich im transparenten oder transluzenten Bereich des Deckels 2, und bewirkt somit eine Ausleuchtung der Tastfelder 12. Die Tastfelder 12 bilden zusammen ein Eingabefeld.

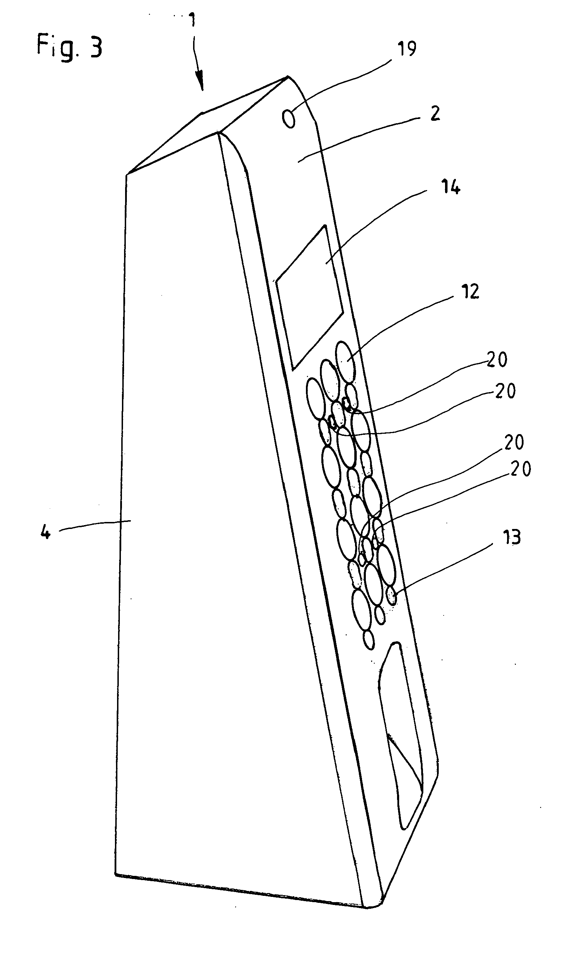

Figur 3 zeigt die montierte Eingabevorrichtung in einer perspektivischen Seitenansicht. Bodenfläche des Gehäuseunterteils und Deckelfläche sind antiparallel zueinander. Das Gehäuse hat in der Seitenansicht eine trapezförmige Geometrie.

Figur 1 zeigt weiterhin Befestigungsmittel 18, insbesondere Schrauben, mittels welcher das Verschlusselement 7 am Gehäuseunterteil 4 befestigt ist.

Weiterhin weist die Platine 3 einen Lichtsensor 19, insbesondere Fotowiderstand, auf, welcher die Helligkeit am Einsatzort erfasst. In Abhängigkeit der Helligkeit am Einsatzort ist die Hinterleuchtung der Tastfelder 12 mittels des Lichtleiters 10 einstellbar. Insbesondere ist die Hinterleuchtung der Tastfelder 12 ab einem Schwellwert der Helligkeit einschaltbar. In vorteilhafter Weise kann bei ausreichender Helligkeit der Umgebung Energie durch ein Herunterregeln und/oder Abschalten der Hinterleuchtung eingespart werden.

Die Herstellung der erfindungsgemäßen Eingabevorrichtung geht wie folgt von statten. Ein Gehäuseunterteil 4 wird mit einem Deckel 2 wasserdicht verbunden, insbesondere durch Ultraschallverschweißung. Eine Ausnehmung, insbesondere eine Öffnung 5 im Gehäuse zum Zugang einer in dem Gehäuse 1 angeordneten Energiequelle wird mittels eines Verschlusselements 7 gegen das Eindringen von Feuchtigkeit, insbesondere Regenwasser, abgedichtet, insbesondere wasserdicht abgedichtet. Hierzu wird an dem Verschlusselement 7 ein Kragen 15 ausgebildet, welcher eine einsteckseitige Schulter zum Anlegen einer Dichtung 8 bereitstellt. Ferner wird zwischen dem Gehäuseunterteil 4 und dem Deckel 2 und/oder zwischen dem Verschlusselement 7 und der Ausnehmung 5 eine semipermeable Membran angeordnet. In dem Gehäuse 1 wird eine Platine 3 angeordnet. Die Platine 3 wird derart angeordnet, so dass auf der Platine 3 vorgesehene elektronische Schalter 11 mit Tastfeldern 12 des Deckels 2 zusammenwirken. Die Platine 3 wird ferner mittels Federelementen unter Vorspannung gegen die Deckelrückseite gedrückt. Hierzu werden zwischen Auflagern 17 und Platine 3 Federelemente angeordnet. Die Tastfelder 12 auf dem Deckel 2 werden durch Erhöhungen und/oder Vertiefungen gebildet. Der Deckel 2 wird dabei beispielsweise mittels eines Spritzgussverfahrens hergestellt, wobei die Bereiche des Deckels 2 die nicht als Tastfelder 12 ausgebildet sind, eine höhere Materialstärke aufweisen.

Ferner wird an jedem Tastfeld 12 eine sich an den Umfang des Tastfeldes 12 anschließende Tasche 13 gebildet, welche der Aufnahme von Flüssigkeit, insbesondere Regenwasser dient.

Der Deckel 2 wird ferner aus einem transparenten oder transluzenten Kunststoff gebildet, der auf seiner dem Gehäuseunterteil 4 zugewandten Oberfläche mit einer bedruckbaren Folie verbunden wird.

Zwischen Platine 3 und Deckel 2 wird ferner ein Lichtleiter 10 angeordnet.

In dem Gehäuse 1 wird eine Anzeigevorrichtung, beispielsweise ein Display 14 angeordnet und zum Zusammenwirken mit einem transparenten oder transluzenten Bereich des Deckels 2 ausgebildet.

Die Materialdicke des Deckels 2 wird derart gewählt, so dass bei Verformungen aufgrund von Temperaturschwankungen ein Fehlkontakt mit der Platine 3 unterbunden wird.

### Bezugszeichen:

- 1: Gehäuse
- 2: Deckel
- 3: Platine
- 4: Gehäuseunterteil
- 5: Öffnung
- 6: Batteriebox
- 7: Verschlusselement
- 8: Dichtung
- 9: Energiequelle
- 10: Lichtleiter
- 11: elektronischer Schalter
- 12: Tastfeld
- 13: Tasche
- 14: Display
- 15: Kragen
- 16: angefaster Flansch
- 17: Auflager
- 18: Befestigungsmittel
- 19: Lichtsensors
- 20: Beleuchtungselement

## Patentansprüche

1. Eingabevorrichtung, insbesondere zur Steuerung und/oder Übermittlung von Öffnungs- und/oder Schließbefehlen eines elektronischen Schlosses, mit einem Gehäuse (1), einem am oder im Gehäuse (1) angeordneten und Tastfelder (12) aufweisende Eingabefeld, und einem Beleuchtungselement (20) zum Beleuchten der Tastfelder (12), wobei das Beleuchtungselement (20) innerhalb des Eingabefelds zwischen den Tastfeldern (12) angeordnet ist, wobei das Beleuchtungselement (20) signaltechnisch mit einem oder mehreren Tastfeldern (12) verbunden ist, derart, dass durch einen Druck auf ein Tastfeld (12) das Beleuchtungselement (20) von einem aktivierten in einen deaktivierten Zustand oder von einem deaktivierten in einen aktivierten Zustand schaltbar ist.

2. Eingabevorrichtung nach Anspruch 1, **dadurch gekennzeichnet, dass** das Beleuchtungselement (20) bei Unterschreiten einer definierten Lichtstärke aktiviert ist und durch ein Signal eine Tastfelds (12) deaktivierbar ist, und/oder bei Überschreiten der definierten Lichtstärke deaktiviert ist und durch ein Signal eines Tastfelds (12) aktivierbar ist.

3. Eingabevorrichtung nach einem der vorangehenden Ansprüche, **dadurch gekennzeichnet, dass** das Beleuchtungselement (20) innerhalb des Gehäuses (1) angeordnet ist.

4. Eingabevorrichtung nach einem der vorangehenden Ansprüche, **dadurch gekennzeichnet, dass** das Beleuchtungselement (20) zwischen vier benachbarten, insbesondere in einem Quadrat angeordneten Tastfeldern (12) des insbesondere als Nummernblock mit vorzugsweise zehn Tastfeldern (12) ausgebildeten Eingabefelds angeordnet ist.

5. Eingabevorrichtung nach einem der vorangehenden Ansprüche, **dadurch gekennzeichnet, dass** das Eingabefeld und/oder die Tastfelder (12) aus einem transparenten oder transluzenten Kunststoff ausgebildet ist beziehungsweise sind.

6. Eingabevorrichtung nach einem der vorangehenden Ansprüche, **dadurch gekennzeichnet, dass** das Eingabefeld und/oder die Tastfelder (12) einstückig mit dem Gehäuse (1) ausgebildet ist beziehungsweise sind.

7. Eingabevorrichtung nach einem der vorangehenden Ansprüche, **dadurch gekennzeichnet, dass** eine Vielzahl von Beleuchtungselementen (20) vorgesehen ist, wobei zu jedem Tastfeld (12) wenigstens ein Beleuchtungselement (20) benachbart, insbesondere in Sichtlinie angeordnet ist.

8. Eingabevorrichtung nach einem der vorangehenden Ansprüche, **gekennzeichnet durch** einen Lichtsensor (19).

9. Eingabevorrichtung nach Anspruch 8, **dadurch gekennzeichnet, dass** der Lichtsensor (19) signaltechnisch mit dem Beleuchtungselement (20) beziehungsweise den Beleuchtungselementen (20) gekoppelt ist.

10. Eingabevorrichtung nach Anspruch 9, **dadurch gekennzeichnet, dass** das Beleuchtungselement (20) beziehungsweise die Beleuchtungselemente (20) in Abhängigkeit eines Signals des Lichtsensors (19) schaltbar ist beziehungsweise sind.

11. Eingabevorrichtung nach einem der vorangehenden Ansprüche, **dadurch gekennzeichnet, dass** das Beleuchtungselement (20) mit unterschiedlichen Lichtstärken betreibbar ausgebildet ist.

12. Eingabevorrichtung nach einem der vorangehenden Ansprüche, **gekennzeichnet durch** einen Bewegungssensor.

13. Verfahren zum Betrieb einer Eingabevorrichtung zur Steuerung und/oder Übermittlung von Öffnungs- und/oder Schließbefehlen eines elektronischen Schlosses, mit einem Gehäuse (1), einem am oder im Gehäuse (1) angeordneten und Tastfelder (12) aufweisende Eingabefeld, und einem Beleuchtungselement (20) zum Beleuchten der Tastfelder (12), wobei das Beleuchtungselement (20) innerhalb des Eingabefelds zwischen den Tastfeldern (12) angeordnet ist, wobei das Beleuchtungselement (20) signaltechnisch mit einem oder mehreren Tastfeldern (12) verbunden ist, wobei durch einen Druck auf ein Tastfeld (12) das Beleuchtungselement (20) von einem aktivierten in einen deaktivierten Zustand oder von einem deaktivierten in einen aktivierten Zustand geschaltet wird.

14. Verfahren nach Anspruch 13, **dadurch gekennzeichnet, dass** das Beleuchtungselement in Abhängigkeit einer aktuellen Lichtstärke angesteuert wird.

15. Verfahren nach Anspruch 13 oder 14, **dadurch gekennzeichnet, dass** der Betrieb des Beleuchtungselements in Abhängigkeit eines fest einprogrammierten Tag/Nacht-Rhythmus durchgeführt wird.

16. Verfahren nach einem der Ansprüche 13 bis 15, **dadurch gekennzeichnet, dass** die aktuelle Lichtstärke mit einem Lichtsensor gemessen wird.

17. Verfahren nach einem der Ansprüche 13 bis 16, **dadurch gekennzeichnet, dass** zur Signalisierung einer Bereitschaft der Tastatur ein lichtstärkeres oder lichtschwächeres Leuchten genutzt wird als zur Beleuchtung der Tastfelder.
